# EUROPÄISCHE PATENTSCHRIFT

(11) **EP 3 359 786 B1**
(45) Veröffentlichungstag und Bekanntmachung des Hinweises auf die Patenterteilung: **17.07.2019**
(21) Anmeldenummer: 16762794.2
(22) Anmeldetag: 07.09.2016
(51) Int. Cl.: F01N 3/20, F01N 9/00, F01N 11/00, B60K 15/00, B60K 13/04

(54) **FLUID-VERSORGUNGSMODUL**
FLUID SUPPLY MODULE
MODULE D'ALIMENTATION FLUIDE

(30) Priorität: 05.10.2015 DE 102015219161
(43) Veröffentlichungstag der Anmeldung: 15.08.2018
(73) Patentinhaber: Robert Bosch GmbH, 70442 Stuttgart (DE)
(72) Erfinder: KIONTKE, Martin, 71254 Ditzingen (DE)
(86) Internationale Anmeldenummer: PCT/EP2016/071058
(87) Internationale Veröffentlichungsnummer: WO 2017/060020

(56) Entgegenhaltungen:
- EP-A1- 2 504 538
- EP-A1- 2 791 746
- WO-A1-2011/160836
- JP-A- 2010 048 772
- JP-A- 2012 016 085
- US-A1- 2011 147 485

## Beschreibung

Die Erfindung betrifft ein Fluid-Versorgungsmodul, insbesondere ein Versorgungsmodul zum Bereitstellen eines in den Abgasstrang eines Verbrennungsmotors einzuspritzenden fluiden Reduktionsmittels.

Bei Kraftwagen mit Verbrennungsmotoren, insbesondere Dieselmotoren, muss unter anderem der Schadstoff NOₓ reduziert werden. Eine Methode, die dabei zur Anwendung kommt, ist das Verfahren der sogenannten selektiven katalytischen Reduktion ("SCR-Verfahren"), bei dem NOₓ unter zu Hilfenahme eines Reduktionskatalysators und eines flüssigen Reduktionsmittels, insbesondere einer wässrigen Harnstofflösung ("AdBlue" ®), zu N₂ und H₂O reduziert wird.

Das Reduktionsmittel wird von einer Fluidfördervorrichtung, die insbesondere eine Pumpe umfasst, aus einem Tank entnommen und von einer Einspritzvorrichtung stromaufwärts eines Reduktionskatalysators in den Abgasstrang des Verbrennungsmotors eingedüst.

Die Fluidfördervorrichtung, der Tank und die Steuerelektronik der Fluidfördervorrichtung sind häufig in einem Versorgungsmodul integriert.

US 2011/147485 A1 offenbart eine Heizsiebvorrichtung für ein System zur selektiven katalytischen Reduktion. Die Heizsiebvorrichtung hat einen Einlassabschnitt, in dem eine Einlasseinrichtunq ausgebildet ist, die einem Filterelement zugeordnet ist, das mit einem anzusaugenden Fluid direkt in Kontakt steht; und einen Heizabschnitt, der in einem vom mittigen Einlassabschnitt getrennten Gehäuse am Umfang des mittigen Einlassabschnitts angeordnet ist und elektrische Heizelemente aufweist. Die Heizsiebvorrichtung hat eine Basis, die aus einem flachen Ring ausgebildet ist, der zwei Wände aufweist, die auf seiner oberen Fläche hervorstehen. Die Heizsiebvorrichtung umfasst auch eine scheibenförmige Platte, die auf ihrer unteren Fläche zwei ringförmige Nuten aufweist, die dazu vorgesehen sind, den oberen Rand der zylindrischen Wände aufzunehmen.

Es ist wünschenswert, das Versorgungsmodul so zu konstruieren, dass auch im Falle einer Leckage des Tanks oder des Versorgungsmoduls eine Beschädigung der Steuerelektronik durch auslaufendes Reduktionsmittel zuverlässig verhindert wird.

Gemäß einem Ausführungsbeispiel der Erfindung umfasst ein Versorgungsmodul, das zum Bereitstellen eines Fluids, insbesondere eines fluiden Reduktionsmittels, vorgesehen und ausgebildet ist, eine Bodenplatte und eine Abdeckplatte. Die Abdeckplatte ist so in einem Abstand von der Bodenplatte angeordnet, dass zwischen der Bodenplatte und der Abdeckplatte ein Hohlraum ausgebildet ist. Die Bodenplatte und/oder die Abdeckplatte sind mit einem Verbindungsbereich ausgebildet, der den Hohlraum im Bereich zwischen der Bodenplatte und der Abdeckplatte begrenzt. Der Verbindungsbereich wird durch Vorsprünge begrenzt, die auf der Bodenplatte und auf der Abdeckplatte ausgebildet sind. Die Vorsprünge greifen so ineinander, dass sie eine Labyrinthstruktur ausbilden. Zwischen der Bodenplatte und der Abdeckplatte ist im Verbindungsbereich ein Dichtungselement angeordnet. Die Kombination aus Labyrinthstruktur und Dichtungselement verhindert oder zumindest erschwert und verzögert, dass das Fluid durch den Verbindungsbereich in den Hohlraum eindringt.

Auf diese Weise wird eine Steuerelektronik, die in dem Hohlraum angeordnet ist und die insbesondere wenigstens eine elektrische Leiterplatte mit elektrischen/ elektronischen Bauteilen umfasst, effektiv und kostengünstig davor geschützt, bei einer Leckage des Tanks oder des Versorungsmoduls in Kontakt mit dem fluiden Reduktionsmittel (Fluid) zu kommen.

Die Leiterplatte mit der Steuerelektronik ist so in dem Hohlraum angeordnet, dass im Falle einer Leckage ein gerichtetes Eindringen des Fluids erfolgt. Durch Anordnung der Abdeckplatte auf der Bodenplatte wird in Kombination mit der Labyrinthstruktur erreicht, dass sich der Hohlraum von "unten nach oben" mit dem Fluid füllt. Auf diese Weise kann das Fluid gezielt in Bereiche geleitet werden, die ein sicheres Detektieren der Leckage ermöglichen, bevor es zu Schädigungen der Steuerelektronik (z.B. durch unkontrolliertes Tropfen des Fluids auf die Steuerelektronik) kommt.

Durch ineinandergreifende Vorsprünge kann die gewünschte Labyrinthstruktur des Verbindungsbereichs zwischen der Bodenplatte und/oder der Abdeckplatte einfach und kostengünstig realisiert werden.

In einer Ausführungsform weisen die Bodenplatte und die Abdeckplatte insbesondere jeweils wenigstens zwei Vorsprünge auf. Dadurch kann eindringenden Fluid gezielt in Bereiche geleitet werden, die ein sicheres Detektieren der Leckage ermöglichen, bevor es zu Schädigungen der Steuerelektronik kommt.

In einer Ausführungsform ist zwischen den Vorsprüngen wenigstens ein Fluid-Sammelraum ausgebildet, um Fluid, das aus dem Tank ausgetreten ist, zu sammeln. Durch einen solchen Fluid-Sammelraum kann ein Vordringen von Fluid zur Steuerelektronik bzw. Leiterplatte verhindert oder zumindest weiter verzögert werden.

In einer Ausführungsform ist in dem wenigstens einen Fluid-Sammelraum wenigstens ein Detektionsstift angeordnet, der elektrisch mit einer Detektionsvorrichtung verbunden ist. Die Detektionsvorrichtung ist ausgebildet, Fluid, das sich in dem Fluid-Sammelraum befindet, zu detektieren und den Betrieb des Versorgungsmoduls zu beenden, wenn Fluid im Fluid-Sammelraum detektiert worden ist. Auf diese Weise kann eine Beschädigung der Steuerelektronik durch eindringendes Fluid, insbesondere durch einen Kurzschluss auf der elektrischen Leiterplatte, verhindert werden, indem die Steuerelektronik abgeschaltet wird, bevor das eindringende Fluid die Labyrinthstruktur passiert hat und zur Steuerelektronik vorgedrungen ist.

Die Detektionsvorrichtung kann innerhalb des Hohlraums oder außerhalb des Hohlraums, insbesondere auch außerhalb des Versorgungsmoduls angeordnet sein. Durch Anordnen der Detektionsvorrichtung in dem Hohlraum kann das Versorgungsmodul besonders kompakt ausgebildet werden. Durch Anordnen der Detektionsvorrichtung außerhalb des Hohlraums, insbesondere außerhalb des Versorgungsmoduls, kann die Betriebssicherheit noch weiter erhöht werden, da die Detektionsvorrichtung in diesem Fall baulich und räumlich von der Steuerelektronik getrennt und in einem größeren Abstand von dem eindringenden Fluid angeordnet ist.

Ein Verfahren zum Detektieren einer Fluidleckage in einem Versorgungsmodul gemäß einem Ausführungsbeispiel der Erfindung umfasst, ein von dem wenigstens einen Detektionsstift bereitgestelltes Signal auszuwerten. Auf diese Weise kann eine Fluidleckage zuverlässig erkannt werden, um eine Beschädigung der Steuerelektronik durch eindringendes Fluid zu verhindern.

Ein Verfahren zum Starten des Betriebs eines Versorgungsmoduls gemäß einem Ausführungsbeispiel der Erfindung umfasst, ein Verfahren zum Detektieren einer Fluidleckage durchzuführen, und den Betrieb des Versorgungsmoduls nicht zu starten, wenn das Auswerten des von dem wenigstens einen Detektionsstift bereitgestellten Signals ergibt, dass eine Leckage vorhanden ist. Auf diese Weise kann ein Starten des Betriebs des Versorgungsmoduls, das im Falle einer Leckage zu einer Beschädigung der Steuerelektronik, z.B. durch einen Kurzschluss auf der Leiterplatte, führen kann, zuverlässig verhindert werden.

Ein Verfahren des Betreibens eines Versorgungsmoduls gemäß einem Ausführungsbeispiel der Erfindung umfasst, ein Verfahren zum Detektieren einer Fluidleckage durchzuführen, und den Betrieb des Versorgungsmoduls zu beenden, wenn das Auswerten des von dem wenigstens einen Detektionsstift bereitgestellten Signals ergibt, dass eine Leckage vorhanden ist. So kann ein Betrieb des Versorgungsmoduls, der im Falle einer Leckage zu einer Beschädigung der Steuerelektronik, z.B. durch einen Kurzschluss auf der Leiterplatte, führen kann, zuverlässig verhindert werden.

### Kurze Beschreibung der Figuren:

Figur 1 zeigt eine Schnittansicht eines Bodenbereichs eines Versorgungsmoduls gemäß einem ersten Ausführungsbeispiel der Erfindung.
Figur 2 zeigt eine Schnittansicht eines Bodenbereichs eines Versorgungsmoduls gemäß einem zweiten Ausführungsbeispiel der Erfindung.
Figur 3 zeigt eine Schnittansicht eines Bodenbereichs eines Versorgungsmoduls gemäß einem dritten Ausführungsbeispiel der Erfindung.

### Figurenbeschreibung:

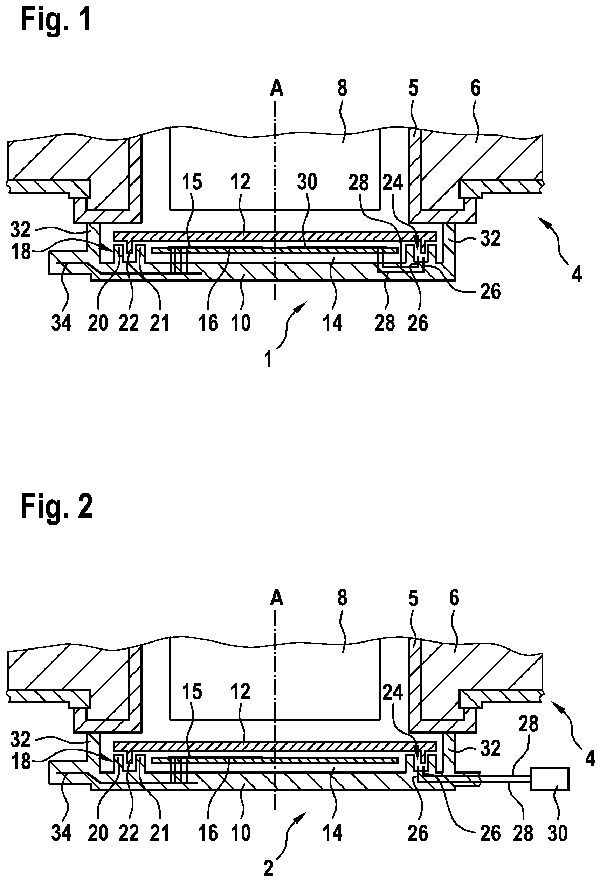

Figur 1 zeigt eine Schnittansicht eines Bodenbereichs eines Versorgungsmoduls 1 gemäß einem ersten Ausführungsbeispiel der Erfindung.

Das Versorgungsmodul 1 umfasst eine zentral angeordnete, im Wesentlichen zylinderförmig um eine Achse A ausgebildete Fluid-Förderpumpe 8 und ein ringförmig um den Umfang der Fluid-Förderpumpe 8 ausgebildetes Tankvolumen, das zur Speicherung des zu fördernden Fluids 6 vorgesehen ist. Ein Träger 5 ist auf Stiften oder Stegen 32, die auf einer Oberseite einer Bodenplatte 10 angeordnet oder ausgebildet sind, abgestützt. Ein Tank 4 ist fluiddicht mit dem Träger 5 verbunden, so dass das Tankvolumen, in dem das Fluid 6 gespeichert ist, durch den Träger 5 und den Tank 4 begrenzt wird.

Auch die Fluid-Förderpumpe 8 kann auf in der Figur 1 nicht gezeigten Stiften oder Stegen 32 der Bodenplatte 10 abgestützt sein oder von (nicht in der Figur 1 gezeigten) Halterungen gehalten werden, die an dem Tank 4 ausgebildet sind.

Unterhalb des Tanks 4 und der Fluid-Förderpumpe 8 ist eine Abdeckplatte 12 derart angeordnet, dass zwischen der Bodenplatte 10 und der Abdeckplatte 12 ein Hohlraum 14 ausgebildet ist.

In dem Hohlraum 14 ist wenigstens eine Leiterplatte 16 angeordnet, auf der insbesondere eine Steuerelektronik 15 des Versorgungsmoduls 1 ausgebildet ist. Die Leiterplatte 16 ist über elektrische Verbindungen 34, die durch die Bodenplatte 10 geführt sind, mit der Fluid-Förderpumpe 8, einer in der Figur nicht gezeigten Stromquelle und anderen Komponenten des Fördermoduls 1 verbunden, so dass diese von der Steuerelektronik 15 angesteuert werden können.

Die Bodenplatte 10 weist in ihrem in radialer Richtung äußeren Bereich Vorsprünge 20, 21 auf. Die Vorsprünge 20, 21 sind insbesondere in Form konzentrischer Ringe um die Achse A auf der Seite der Bodenplatte 10 ausgebildet, die der Abdeckplatte 12 der zugewandt ist.

Die Abdeckplatte 12 weist ihrerseits wenigstens einen ringförmig um die Achse A ausgebildeten Vorsprung 22 auf, der der Bodenplatte zugewandt ist. Der Vorsprung 22 der Abdeckplatte 12 ist insbesondere so ausgebildet, dass er zwischen zwei benachbarten Vorsprüngen 20, 21 der Bodenplatte 10 angeordnet ist. Dadurch bilden die Bodenplatte 10, die Abdeckplatte 12 und die jeweiligen Vorsprünge 20, 21, 22 in einem Verbindungsbereich 18, d.h. in dem Bereich, in dem die Bodenplatte 10 und die Abdeckplatte 12 aneinander grenzen, eine Labyrinth-Struktur aus, die das Eindringen von Fluid in den Hohlraum 14 durch den Verbindungsbereich 18 verhindert oder zumindest erschwert und verzögert.

Durch die im Verbindungsbereich 18 auf diese Weise geschaffene Labyrinth-Struktur wird zwischen den beiden Vorsprüngen 20, 21 der Bodenplatte 10 ein ringförmig um die Achse A ausgebildeter Fluid-Sammelraum 24 geschaffen, in dem sich eindringendes Fluid, das den äußeren Vorsprung 20 passiert hat, sammelt, bevor es über den zweiten Vorsprung 21 in den Hohlraum 14 mit der Leiterplatte 16 eindringen kann.

In dem Fluid-Sammelraum 24 sind zwei Detektionsstifte 26 angeordnet, die über zugehörige elektrische Leitungen 28 mit der im Hohlraum 14 angeordneten Leiterplatte 16 verbunden sind. Auf der Leiterplatte 16 ist eine Detektionsvorrichtung 30 ausgebildet, die eingerichtet ist, Fluid, das sich im Fluid-Sammelraum 24 angesammelt hat und daher im Kontakt mit den beiden Detektionsstiften 26 steht, zu detektieren. Die Detektionsvorrichtung 30 kann als Teil der Steuerelektronik 15 ausgebildet sein und ist insbesondere ausgebildet, die auf der Leiterplatte 16 ausgebildete Steuerelektronik 15 zu deaktivieren, sobald Fluid im Steuerraum 24 detektiert worden ist. Dies kann insbesondere auch dadurch erfolgen, dass ein entsprechendes Signal an ein übergeordnetes System (z.B. die Motorsteuerung) ausgegeben wird, um das Abgasnachbehandlungssystem zu deaktivieren.

Auf diese Weise wird die Steuerelektronik 15 auf der Leiterplatte 16 deaktiviert, bevor eindringendes Fluid in den Hohlraum 14 und insbesondere in Kontakt mit der Leiterplatte 16 gelangen kann. Beschädigungen der Steuerelektronik 15, insbesondere durch Kurzschlüsse, die durch Fluid erzeugt werden können, wenn es in Kontakt mit der Leiterplatte 16 gelangt, können so zuverlässig vermieden werden.

Darüber hinaus kann die Steuerelektronik 15 so eingerichtet sein, dass ein Aktivieren der Steuerelektronik 15 verhindert wird, solange Fluid im Fluid-Sammelraum 24 detektiert wird.

Dadurch, dass die Detektionsvorrichtung 30 im ersten Ausführungsbeispiel gemeinsam mit der Steuerelektronik 15 im Hohlraum 14 ausgebildet ist, kann das Versorgungsmodul 1 besonders kompakt ausgebildet werden.

Figur 2 zeigt ein zweites Ausführungsbeispiel eines erfindungsgemäßen Versorgungsmoduls 2.

Diejenigen Elemente des Versorgungsmoduls 2 gemäß dem zweiten Ausführungsbeispiel, die mit den Elementen des Versorgungsmoduls 1 gemäß dem in der Figur 1 gezeigten ersten Ausführungsbeispiel übereinstimmen, sind in der Figur 2 mit den gleichen Bezugszeichen versehen und werden nicht erneut im Detail beschrieben.

Anders als im ersten Ausführungsbeispiel ist die Detektionsvorrichtung 30 im zweiten Ausführungsbeispiel nicht auf der Leiterplatte 16 und auch nicht im Hohlraum 14 des Versorgungsmoduls 2 ausgebildet. In diesem Ausführungsbeispiel ist die Detektionsvorrichtung 30 vielmehr außerhalb des Hohlraums 14 und in einer möglichen Variante sogar vollständig außerhalb des Versorgungsmoduls 2 angeordnet.

Da die Detektionsvorrichtung 30 in diesem Ausführungsbeispiel räumlich von dem Hohlraum 14 und der Leiterplatte 16 getrennt ist, bleibt die Detektionsvorrichtung 30 auch dann funktionsfähig, wenn der Hohlraum 14 mit Fluid gefüllt ist.

Ein Versorgungsmodul 2 gemäß dem zweiten Ausführungsbeispiel, bei dem die Detektionsvorrichtung 30 außerhalb des Hohlraums 14 angeordnet ist, weist daher eine besonders hohe Betriebssicherheit auf.

Die außerhalb des Hohlraums 14 angeordnete Detektionsvorrichtung 30 kann das Vorhandensein von Fluid im Fluid-Sammelraum 24 zuverlässig erkennen und ein Starten der auf der Leiterplatte 16 ausgebildeten Steuerelektronik 15 zuverlässig verhindern. Es besteht daher keine Gefahr, dass die Steuerelektronik 15 durch Kurzschlüsse, die von Fluid im Hohlraum 14 verursacht werden, beschädigt wird.

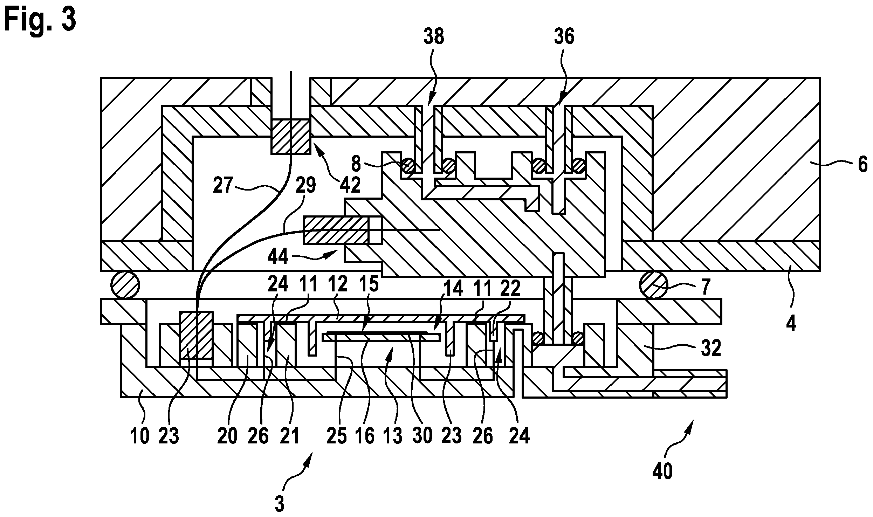

Figur 3 zeigt ein weiteres Ausführungsbeispiel eines unteren Bereichs eines Versorgungsmoduls 3, bei dem der Kontaktstelle zwischen dem Tank 4 und dem Steg 32 der Bodenplatte 10 durch ein Dichtelement 7, insbesondere einen O-Ring, abgedichtet ist.

Auch eine Kontaktstelle zwischen dem inneren Vorsprung 21 der Bodenplatte 10 und der Abdeckplatte 12 ist durch ein Dichtungselement 11 abgedichtet, um das Eindringen von Fluid in den Hohlraum 14 zu verhindern. Das Dichtungselement 11 kann beispielsweise als O-Ring oder Dichtlippe ausgebildet sein.

Alternativ kann das Abdichten durch Schweißen, z.B. Ultraschall-, Laser- oder Heizelementschweißen, oder durch eine Klebeverbindung erfolgen.

Weiterhin ist in der Figur 3 die Fluid-Förderpumpe 8 erkennbar, die über einen Zulauf 36 und einen Rücklauf 38 mit dem Tankvolumen verbunden ist. Eine Ausgangsdruckleitung 40 der Fluid-Förderpumpe 8 / des Versorgungsmoduls 3, führt zu einer (nicht gezeigten) Einspritzvorrichtung, die am Abgasstrang des (nicht gezeigten) Verbrennungsmotors angeordnet ist.

In dem in der Figur 3 gezeigten Ausführungsbeispiel weist die Abdeckplatte 12 einen zusätzlichen Vorsprung 23 auf, der innerhalb des zuvor beschriebenen ringförmig ausgebildeten Vorsprungs 22 angeordnet ist.

Durch den zusätzlichen Vorsprung 23 wird eindringendes Fluid noch effektiver in den unteren Bereich des Hohlraums 14 geführt. Dies ermöglicht ein sicheres Detektieren einer Leckage, insbesondere ein Erkennen der Leckage, bevor es zu Schädigungen der Steuerelektronik 15 auf der Leiterplatte 16 kommt.

Das in der Figur 3 gezeigte Versorgungsmodul 3 weist einen weiteren Detektionsstift 25 auf, der sich ausgehend von der Leiterplatte 16 durch die Bodenplatte 10 und durch einen Steckverbinder 23 entlang von Kabelbäumen 27, 29 erstreckt. Die Kabelbäume 27, 29 verbinden die Leiterplatte 16 elektrisch mit der Fluid-Förderpumpe 8 und durch eine fluiddicht abgedichtete Kabelbaumöffnung 42 mit (nicht in der Figur 3 gezeigten) Komponenten und Sensoren, die in einem oberen Bereich des Versorgungsmoduls 3 angeordnet sind.

Auf diese Weise kann Fluid, das sich im Falle einer Leckage in einem Raum 13 unterhalb der Leiterplatte 16 und/oder im Bereich des Steckverbinders 23 angesammelt hat, und/oder das entlang der Kabelbäume 27, 29 fließt bzw. kriecht, zuverlässig detektiert werden. Eine Fluid-Leckage kann so frühzeitig, insbesondere direkt am Ort ihrer Entstehung, beispielsweise an der Pumpe 8 oder an der Kabelbaumöffnung 42, detektiert werden. Dies ermöglicht es, das Versorgungsmodul 3 im Falle einer Fluid-Leckage frühzeitig zu deaktivieren und eine Beschädigung der Steuerelektronik 15 durch Fluid zuverlässig zu vermeiden.

Die Detektionsstifte 25, 26 können insbesondere durch das gesamte Versorgungsmodul 3 geführt werden, um es zu ermöglichen, austretendes Fluid an

## Patentansprüche

1. Versorgungsmodul (1; 2; 3) zum Bereitstellen eines Fluids, insbesondere eines fluiden Reduktionsmittels (6), mit
einer Bodenplatte (10); und
einer Abdeckplatte (12), die in einem Abstand von der Bodenplatte (10) derart angeordnet ist, dass zwischen der Bodenplatte (10) und der Abdeckplatte (12) ein Hohlraum (14) ausgebildet ist;
wobei wenigstens eine von der Bodenplatte (10) und der Abdeckplatte (12) mit einem durch Vorsprünge (20, 21, 22, 23) begrenzten Verbindungsbereich (18) ausgebildet ist, der den Hohlraum (14) seitlich begrenzt;
wobei die Vorsprünge (20, 21, 22, 23) auf der Bodenplatte (10) und/oder auf der Abdeckplatte (12) ausgebildet sind und so ineinandergreifen, dass sie eine Labyrinthstruktur ausbilden; und
wobei im Verbindungsbereich (18) ein Dichtungselement (11) zwischen der Bodenplatte (10) und der Abdeckplatte (12) angeordnet ist, um das Eindringen des Fluids in den Hohlraum (14) durch den Verbindungsbereich (18) zu vermeiden oder zu erschweren.

2. Versorgungsmodul (1; 2; 3) nach Anspruch 1, wobei in dem Hohlraum (14) wenigstens eine elektrische Leiterplatte (16) angeordnet ist.

3. Versorgungsmodul (1; 2; 3) nach Anspruch 1 oder 2, wobei die Bodenplatte (10) und die Abdeckplatte (12) insbesondere jeweils wenigstens zwei Vorsprünge aufweisen (20, 21, 22, 23).

4. Versorgungsmodul (1; 2; 3) nach Anspruch 3, wobei im Verbindungsbereich (18) wenigstens ein Fluid-Sammelraum (24) ausgebildet ist.

5. Versorgungsmodul (1; 2; 3) nach Anspruch 4, wobei in dem wenigstens einen Fluid-Sammelraum (24) wenigstens ein Detektionsstift (26) angeordnet ist, der mit einer Detektionsvorrichtung (30) verbunden ist, die ausgebildet ist, Fluid in dem Fluid-Sammelraum (24) zu detektieren.

6. Versorgungsmodul (1) nach einem der Ansprüche 1 bis 5, wobei sich wenigstens ein Detektionsstift (25) ausgehend von einer Leiterplatte (16) zu einer Komponente, insbesondere zu einer Fluid-Förderpumpe (8), des Versorgungsmoduls (3) erstreckt, an der eine Leckage auftreten kann.

7. Versorgungsmodul (1; 2; 3) nach Anspruch 5 oder 6, wobei die Detektionsvorrichtung (30) in dem Hohlraum (14) oder außerhalb des Hohlraums (14), insbesondere außerhalb des Versorgungsmoduls (3), angeordnet ist.

8. Verfahren zum Detektieren einer Leckage in einem Versorgungsmodul (1; 2; 3) nach einem der Ansprüche 6 oder 7, wobei das Verfahren umfasst, ein von dem wenigstens einen Detektionsstift (25, 26) bereitgestelltes Signal auszuwerten.

9. Verfahren zum Starten und/oder Betreiben eines Versorgungsmoduls nach einem der Ansprüche 5 bis 7, wobei das Verfahren umfasst, das Verfahren zum Detektieren einer Leckage nach Anspruch 8 durchzuführen, und den Betrieb des Versorgungsmoduls (1; 2; 3) zu beenden, wenn das Auswerten des von dem wenigstens einen Detektionsstift (25, 26) bereitgestellten Signals ergibt, dass eine Leckage vorhanden ist.

## Claims

1. Supply module (1; 2; 3) for providing a fluid, in particular a fluid reducing agent (6), having
a base plate (10); and
a cover plate (12) which is arranged at a distance from the base plate (10) such that a cavity (14) is formed between the base plate (10) and the cover plate (12);
wherein at least one of the base plate (10) and the cover plate (12) is formed with a connection region (18) which is delimited by projections (20, 21, 22, 23) and which laterally delimits the cavity (14);
wherein the projections (20, 21, 22, 23) are formed on the base plate (10) and/or on the cover plate (12) and engage into one another such that they form a labyrinth structure; and
wherein, in the connection region (18), a seal element (11) is arranged between the base plate (10) and the cover plate (12) in order to prevent or to impede the ingress of the fluid into the cavity (14) through the connection region (18).

2. Supply module (1; 2; 3) according to Claim 1, wherein at least one electrical circuit board (16) is arranged in the cavity (14).

3. Supply module (1; 2; 3) according to Claim 1 or 2, wherein the base plate (10) and the cover plate (12) in particular each have at least two projections (20, 21, 22, 23).

4. Supply module (1; 2; 3) according to Claim 3, wherein at least one fluid-collecting space (24) is formed in the connection region (18).

5. Supply module (1; 2; 3) according to Claim 4, wherein, in the at least one fluid-collecting space (24), there is arranged at least one detection pin (26), which is connected to a detection device (30) which is designed to detect fluid in the fluid-collecting space (24).

6. Supply module (1) according to one of Claims 1 to 5, wherein at least one detection pin (25) extends from a circuit board (16) to a component, in particular to a fluid delivery pump (8), of the supply module (3), at which a leak can occur.

7. Supply module (1; 2; 3) according to Claim 5 or 6, wherein the detection device (30) is arranged in the cavity (14) or outside the cavity (14), in particular outside the supply module (3).

8. Method for detecting a leak in a supply module (1; 2; 3) according to either of Claims 6 and 7, wherein the method comprises evaluating a signal provided by the at least one detection pin (25, 26).

9. Method for starting and/or operating a supply module according to one of Claims 5 to 7, wherein the method comprises carrying out the method for detecting a leak according to Claim 8, and ending the operation of the supply module (1; 2; 3) if the evaluation of the signal provided by the at least one detection pin (25, 26) reveals that a leak is present.

## Revendications

1. Module d'alimentation (1; 2; 3) pour la fourniture d'un fluide, en particulier d'un agent réducteur fluide (6), avec
une plaque de fond (10); et
une plaque de recouvrement (12), qui est disposée à une distance de la plaque de fond (10), de telle manière qu'un espace creux (14) soit formé entre la plaque de fond (10) et la plaque de recouvrement (12);
dans lequel au moins une de la plaque de fond (10) et de la plaque de recouvrement (12) est formée avec une zone d'assemblage (18) limitée par des saillies (20, 21, 22, 23), qui limite latéralement l'espace creux (14);
dans lequel les saillies (20, 21, 22, 23) sont formées sur la plaque de fond (10) et/ou sur la plaque de recouvrement (12) et s'engagent les unes dans les autres, de telle manière qu'elles forment une structure à labyrinthe; et
dans lequel un élément d'étanchéité (11) est disposé dans la zone d'assemblage (18) entre la plaque de fond (10) et la plaque de recouvrement (12), afin d'éviter ou de contrarier la pénétration du fluide dans l'espace creux (14) par la zone d'assemblage (18).

2. Module d'alimentation (1; 2; 3) selon la revendication 1, dans lequel au moins une plaquette de circuits imprimés électriques (16) est disposée dans l'espace creux (14).

3. Module d'alimentation (1; 2; 3) selon la revendication 1 ou 2, dans lequel la plaque de fond (10) et la plaque de recouvrement (12) présentent en particulier chacune au moins deux saillies (20, 21, 22, 23).

4. Module d'alimentation (1; 2; 3) selon la revendication 3, dans lequel au moins une chambre de collecte de fluide (24) est formée dans la zone d'assemblage (18).

5. Module d'alimentation (1; 2; 3) selon la revendication 4, dans lequel au moins une tige de détection (26) est disposée dans ladite au moins une chambre de collecte de fluide (24), et est reliée à un dispositif de détection (30), qui est conçu pour détecter du fluide dans la chambre de collecte de fluide (24).

6. Module d'alimentation (1) selon l'une quelconque des revendications 1 à 5, dans lequel au moins une tige de détection (25) s'étend à partir d'une plaquette de circuits imprimés (16) jusqu'à un composant, en particulier jusqu'à une pompe de transport de fluide (8), du module d'alimentation (3), auquel une fuite peut se produire.

7. Module d'alimentation (1; 2; 3) selon la revendication 5 ou 6, dans lequel le dispositif de détection (30) est disposé dans l'espace creux (14) ou à l'extérieur de l'espace creux (14), en particulier à l'extérieur du module d'alimentation (3).

8. Procédé pour détecter une fuite dans un module d'alimentation (1; 2; 3) selon une des revendications 6 et 7, dans lequel le procédé comprend l'analyse d'un signal fourni par ladite au moins une tige de détection (25, 26).

9. Procédé pour faire démarrer et/ou fonctionner un module d'alimentation selon l'une quelconque des revendications 5 à 7, dans lequel le procédé comprend l'exécution du procédé de détection d'une fuite selon la revendication 8, et l'arrêt du fonctionnement du module d'alimentation (1; 2; 3), lorsque l'analyse du signal fourni par ladite au moins une tige de détection (25, 26) révèle qu'il existe une fuite.
